(19) Europäisches Patentamt
European Patent Office
Office européen des brevets

(11) **EP 1 033 669 B1**

(12) **EUROPEAN PATENT SPECIFICATION**

(45) Date of publication and mention
of the grant of the patent:
**02.12.2009 Bulletin 2009/49**

(51) Int Cl.:
***G06K 7/00*** (2006.01)

(21) Application number: **00200727.6**

(22) Date of filing: **01.03.2000**

(54) **Single side-band modulation system for interrogating a label**

Einseitenbandmodulationsanordnung zur Abfragung eines Etikettes

Système de modulation à bande latérale unique pour l'interrogation d'une étiquette

(84) Designated Contracting States:
**DE FR GB NL**

(30) Priority: **01.03.1999 NL 1011416**

(43) Date of publication of application:
**06.09.2000 Bulletin 2000/36**

(73) Proprietor: **N.V. Nederlandsche Apparatenfabriek NEDAP**
**7141 DC Groenlo (NL)**

(72) Inventor: **Fockens, Tallienco Wieand Harm**
**7165 BR Rietmolen (NL)**

(74) Representative: **Prins, Adrianus Willem et al**
**Vereenigde**
**P.O.Box 87930**
**2508 DH Den Haag (NL)**

(56) References cited:
**EP-A- 0 288 035      EP-A- 0 608 961**
**WO-A-97/07413      US-A- 4 908 627**
**US-A- 5 822 685**

- **W.E.SABIN, E.O.SCHOENIKE: "Single Sideband Systems and Circuits" , MCGRAW-HILL , NEW YORK XP002140801 ISBN 0-07-912038-5 * page 235 - page 242 * * page 341 - page 344 ***

## Description

The invention relates to a detection system comprising an interrogation unit for generating an electromagnetic interrogation field including a single sideband, and at least one label comprising a resonant circuit and an electric circuit, coupled to the resonant circuit, the resonant circuit resonating upon being introduced into the interrogation field, and the electric circuit optionally driving the resonant circuit in response thereto for transmitting information stored in the electric circuit, such as, for instance, identification information of the label. Such a system is known from WO 97/Ø7413 and US 49Ø8627.

A detection system for detecting resonance effects of a label in a frequency-swept interrogation field by means of single sideband demodulation is known from EP 0 608 961.

Modern RF tagging systems consist of a reading or interrogating unit and tags or labels. These systems are employed for a wide variety of applications: person access control, livestock management systems, identification of goods or the packaging means of such goods, such as containers, pallets, etc., luggage handling at airports, logistic handling in retail, protection from shoplifting, etc.

In an RF ID system, an interrogation unit, also referred to as interrogator, generates with the aid of an antenna a primary magnetic alternating field, the so-called electromagnetic interrogation field. The label, also referred to as tag, contains at the least a coil, which is tuned to the operating frequency of the interrogation field by means of a capacitor, and a preferably integrated electronic circuit. This circuit is fed from the voltage which the primary magnetic alternating field referred to generates in the coil. The electronic circuit preferably contains at least one memory, in which the identification number or other information is stored.

Further, the circuit includes a circuit for remitting this digital information to the interrogation unit through modulation of the load or tuning of the label coil.

The information involved can be fixedly programmed in the label as a serial number determined by the manufacture, a number programmed a single time, or as information which can be programmed or written many times. This last option requires that interrogation units can also transfer information to the label.

In many applications, it may happen that several labels are disposed simultaneously in the interrogation field of the interrogation unit. If all labels involved start to transmit their information simultaneously, this will give rise to mutual interference, so that it cannot be guaranteed that all information is read. To solve this problem, a so-called multi-label protocol is needed, which makes sure that the labels do not exhibit cross-talk but each transfer their information separately. In many multi-label protocols, it is necessary that the interrogation unit then transfers control information to the label.

In conclusion, this means that in the known modern RF tagging systems, mutual information transfer takes place between interrogation unit and label. This means that the interrogating magnetic alternating field must contain a form of modulation. In view of the limited technical possibilities in the circuit of the label for demodulating a signal, this means that this should preferably be a form of amplitude modulation. Modulation of an (interrogation) carrier means that the bandwidth of the carrier is enlarged with the modulation sidebands. For the elementary form of amplitude modulation, this means that on opposite sides of the carrier frequency a sideband is formed of a magnitude of the modulation frequencies.

In the past, as carrier frequencies for RF ID systems, frequencies between 100 and 150 kHz were chosen. For modern systems, a carrier frequency of 13.560 MHz is utilized. The reason of this choice is that the International Telecommunication Union (ITU), in the Radio Regulations, has reserved this frequency for Industrial, Scientific and Medical Appliances (ISM). This frequency is located amidst frequency bands which have been allocated to the so-called primary radio services. The radio users have a right of use to the frequencies and frequency bands assigned to them. The communication of these services may not be disturbed by any other transmissions of electromagnetic fields and energy. Further, other equipment which also utilizes radio frequencies should accept the presence of these radio broadcasts and the possibly interfering effect thereof. In terms of the ITU Radio Regulations, this principle is called: use based on non interference non protection. Only within the ISM band (13.56 MHz ± 7 kHz) are the primary radio users obliged to accept any interference from ISM equipment.

In the ERC/CEPTR Recommendation 70-03, directed to the use of Short Range Devices (SRD's), which includes RF ID systems, the frequency 13.56 MHz ± 7 kHz has been allocated for use by RF ID systems of a field strength of 42 dBmA/m, measured at a distance of 10 m. This high field strength is necessary for feeding a label at distances up to about 1 m from the antenna coil of the reading unit. This field strength coincides with a radiated power of about 10 mW, which the ITU has fixed as radiation limit for ISM equipment.

The width of the ISM band is 14 kHz in total, which is insufficient to contain the modulation sidebands needed for the transfer of information from the reading unit to the label. Within the relevant standardization commissions of ETSI and working groups of CEPT, it has been proposed that in the ERC/CEPT Recommendation 70-03 the band 13.56 MHz ± 7 kHz be broadened by two "shoulders", two frequency bands on opposite sides of the ISM band with a field strength limit of 9 dBmA/m. In this way, it becomes possible, given a limited modulation depth of 10%, to allow a modulation with a data rate of 106 kbit/s.

In these frequency regions (13.410-13.553 and 13.567-13.710 MHz), however, the principle of non interference, non protection applies, so that the users and suppliers of RF ID systems must safeguard the users of radio systems against interference.

The risk of interference of the radio services is determined by a number of factors, the most important one in this situation being the chance that the receiver of a radio service is located a short distance from an RF ID reading unit. 'Short distance' here means: shorter than 1 km. Accordingly, this risk depends on the nature of the radio service. For instance, in the (short-wave) broadcasting service, civilian radio receivers may be randomly spread, hence also at distances shorter than 1 km from a reading unit. Also, the expectation is that RF ID systems will find so much application that in the future they will occur in large numbers in, or close to, residential areas. Adjacent the 13.56 MHz ISM band, there is such a frequency band which is allocated to short-wave broadcasting, viz. 13.570-13.860 MHz. The band 13.567-13.710 MHz falls within it virtually completely. The risk that RF ID systems may cause interference in radio reception of civilians at home is thus present. On the ground of this consideration, there are objections to the ERC/CEPT's assignment of the "shoulder" 13.567-13.710 MHz to the use by RF ID systems. For the other "shoulder", 13.410-13.553 MHz, these objections do not exist because there are no radio services located there whose receivers may be reasonably expected, now or in the future, to be situated close to an RF ID system. Thus, there is the problem that information cannot be transmitted to a label without risks.

The invention provides a solution to the above-mentioned problem. To that end, the detection system according to the invention is **characterized in that** the interrogation unit is arranged for generating the interrogation field, such that this interrogation field is modulated with a single sideband with label information to be sent to the label, such as data or signals which form part of a communication protocol or a multi-label protocol, the electric circuit of the label comprising an envelope detector for demodulation of the interrogation field modulated with the single sideband.

The basis of the system of the invention is formed by the datum that for the information transfer, it is, in principle, sufficient for only one of the two sidebands to be transmitted, that is, in this case, to be made part of the interrogation field. This sideband can be formed, for instance, by amplitude modulation. The modulation depth of the amplitude-modulated interrogation field can be considerably smaller than 100%. Consequently, demodulation by means of, for instance, a diode, for envelope detection, such as is conventional in a label, is still feasible. This principle is used, for instance, in a technique which is used for analog TV broadcasts.

The invention will presently be further explained with reference to the drawing. In the drawing:

Fig. 1 shows an overview of the frequency use around 13.560 MHz;
Fig. 2 schematically shows an interrogation unit which is known per se;

Fig. 3 schematically shows a first embodiment of an interrogation unit of a detection system according to the invention, with the interrogation unit comprising a single sideband modulator according to the filter principle;
Fig. 4 schematically shows a second embodiment of an interrogation unit of a detection system according to the invention, with the interrogation unit comprising a single sideband modulator according to the phase principle;
Fig. 5 shows a modulated carrier such as it can be generated, for instance, by interrogation units of detection systems according to the invention;
Fig. 6 schematically shows a third embodiment of an interrogation unit of a detection system according to the invention, with the interrogation unit comprising a single sideband modulator according to the phase principle, in which the modulation signals are generated digitally;
Fig. 7 schematically shows, in a further elaborated form, a fourth embodiment of an interrogation unit of a detection system according to the invention, with the interrogation unit comprising a single sideband modulator according to the phase principle; and
Fig. 8 schematically shows a fifth embodiment of an interrogation unit of a detection system according to the invention, with the interrogation unit comprising a single sideband modulator according to the principle of the combined phase and amplitude modulation; and
Fig. 9 shows a polyphase network suitable for use in the interrogation unit of a detection system according to the invention.

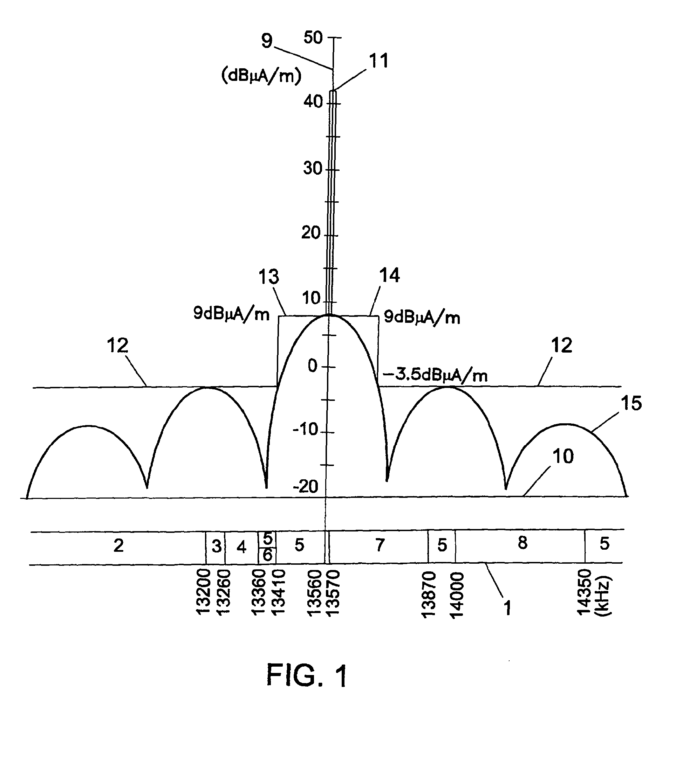

In Fig. 1, bar 1 shows the allocation of the frequency bands to the various radio services: the Maritime Service 2, the Aeronautical Service - Off Route 3, the Aeronautical Service - En Route 4, the Fixed Service 5, the Radio Astronomy Service 6, the Broadcasting Service 7, and the Amateur Service 8. Indicated under bar 1 are the frequencies in kHz of the limits of the different bands. Shown above frequency bar 1 is a field strength diagram in which the vertical axis 9 indicates the magnetic field strength in dBmA/m. The horizontal axis 10 indicates the frequency where the values coincide with the frequencies indicated at bar 1. Vertical axis 9 coincides with the central frequency of the ISM band 13.560 MHz.

In the field strength diagram, the field strength limits are drawn such as they are laid down or proposed in the ERC/CEPT Recommendation 70-03, applying for a measured distance of 10 m: the limit within the ISM band (42 dBmA/m) 11, the spurious limit (-3.5 dBmA/m) 12, the proposed "shoulder" on the lower side 13, and the proposed "shoulder" on the upper side 14, (both 9 dBmA/m).

In the same field strength diagram, curve 15 indicates the spectrum of a double sideband AM modulated signal of an interrogation unit. This spectrum is symmetrical about the carrier frequency, 13.560 MHz.

In Fig. 1, it can now be seen that both the proposed "shoulder" 14 and the upper sideband of the modulated signal of the interrogation unit 15 respectively coincide partly and wholly with the broadcasting band 7. By contrast, the lower sideband (frequency <13.560 kHz) does not coincide with the broadcasting band 7. The services which the lower sideband coincides with, viz. the Maritime Service, the Aeronautical Services Off Route 3 and En Route 4, the Fixed Service 5, and the Radio Astronomy Service 6, utilize a limited number of receiver stations, which are set up in known, and mostly remote, places. It is not to be expected that these receiver stations will sustain interference from 13.56 MHz RD ID systems. Indeed, this has already been demonstrated in studies.

The solution according to the invention to the above-mentioned problem of interference consists in suppressing the upper sideband of the AM modulated interrogation unit signal. That is to say that the amplitude modulation process in the interrogation unit is adapted so as to yield a specific form of amplitude modulation, viz. single sideband modulation.

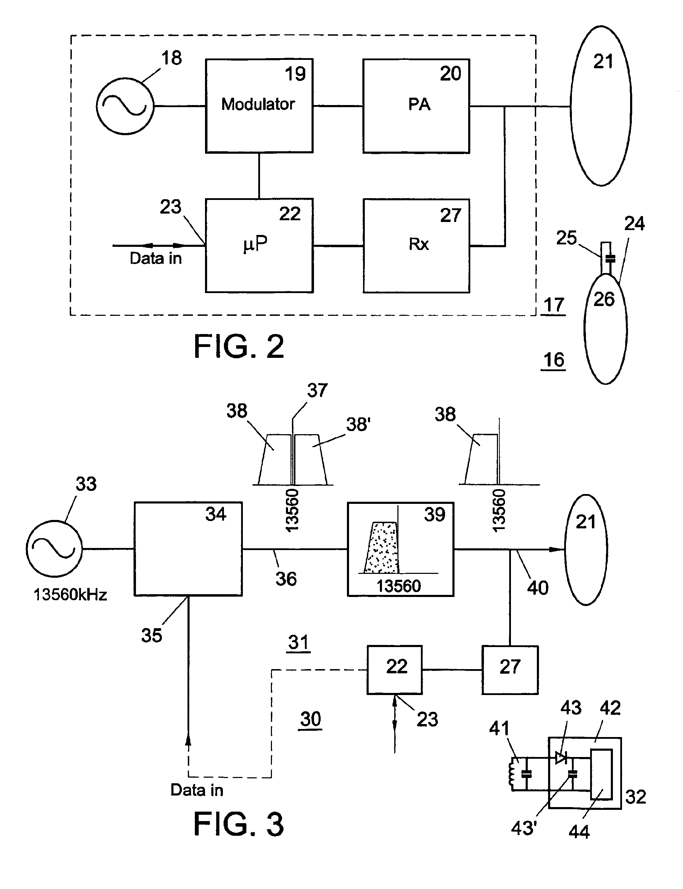

In Fig. 2 reference numeral 16 designates a detection system known per se for detecting labels. Detection system 16 comprises an interrogation unit 17. The interrogation unit 17 comprises an oscillator 18 for generating an electromagnetic signal. This electromagnetic signal consists, in this example, of a carrier, having a carrier frequency of 13.560 MHz. This signal is fed to a modulator 19, where the carrier, accordingly, is modulated. The thus obtained modulated signal is fed via a power amplifier 20 to an antenna 21. The modulation is determined by a microprocessor 22. To that end, label information is fed to an input 23 of the microprocessor. On the basis of the obtained label information, the microprocessor 23 drives the modulator 17, such that the label information is included in two sidebands of the modulated interrogation field. The system further comprises a label 24 which includes a resonant circuit 25 and, coupled thereto, an electric circuit 26. The resonant circuit 25 comprises, for instance, a coil and a capacitor. The resonant circuit is tuned to the carrier frequency mentioned. The resonant circuit 25 enters into resonance when introduced into the interrogation field. From the resonant circuit 25, electric energy is thereupon supplied to the electric circuit 26. The electric circuit 26 contains, for instance, a memory in which identification information is included. The electric circuit 26 thereupon drives the resonant circuit 25 on the basis of the identification information stored. The resonant circuit 25 is thereby, for instance, damped according to a pattern which corresponds with the identification information. The interrogation unit 17 comprises a receiver device 27 which is connected with the antenna 21. The receiver device 27 is arranged to detect the responses from the resonant circuit 25. The system involved may be an absorption as well as a transmission system. The received signals are amplified by the receiver device 27, filtered, and moreover the return signal of the label 24 is demodulated. The thus obtained result is applied to the microprocessor 22. In the microprocessor 22, the result signal is decoded and optionally together with the modulation possibility of the transmitter dealt with by communication protocol.

The microprocessor 22 thereupon communicates with the outside world via the input 23, which functions also as output here. According to an aspect of the invention, in such a detection system and its interrogation unit, single sideband modulation is utilized.

Single sideband modulation as such has been known for quite some time. The book 'Single Sideband Systems & Circuits' by Sabin and Schoenike, McGraw-Hill, Inc., ISBN 0-07-912038-5, gives a very great deal of information about the principles of single sideband modulation and the technical realization thereof.

There are several methods for generating single sideband modulation. One of these is the so-called filter method. Fig. 3 gives the basic diagram of this principle as applied in the detection system comprising an interrogation unit according to the invention.

The detection system 30 according to Fig. 3 comprises an interrogation unit 31 and a label 32. The detection system comprises an oscillator 33 for generating an electromagnetic signal. Further, the detection system comprises an AM double sideband modulator 34, connected with the oscillator, comprising an input 35 to which, in use, the label information to be transmitted is supplied. The modulator 34 modulates the electromagnetic signal coming from the oscillator 33 with the label information, such that the electromagnetic signal is modulated with a double sideband with the label information. To that end, the modulator 34 is equipped as a conventional AM double sideband modulator which delivers an amplitude-modulated signal on the line 36. Schematically indicated in the drawing above line 36 is the carrier 37 with the sidebands 38 and 38'. The signal on line 36 is supplied to a filter 39 for suppressing one of the sidebands, in this example the sideband 38'. Thus on line 40 the interrogation field modulated with a single sideband is obtained, which is fed to an antenna 21. The frequency spectrum of the interrogation field is indicated in the drawing above line 40. It is clear that the interrogation field comprises just the single sideband 38.

The label 32 in this example is provided with a resonant circuit 41 and an electric circuit 42, coupled to the resonant circuit. The resonant circuit resonates when introduced into the interrogation field. Optionally, in response thereto, the electric circuit drives the resonant circuit for transmitting information stored in the electric circuit, such as for instance identification information of the label. The label 32 comprises an envelope detector 43 which in this example is designed as a diode. Using the envelope detector, known per se, which in this example comprises a diode 43 and a capacitance 43', the interrogation field modulated with the single sideband can be demodulated. In this way, label information which is supplied to the input 35 of the microprocessor 34 can be transmitted to the label 32 via the interrogation field. The label 32 demodulates the interrogation field, so that the label information, after demodulation, can be fed, for instance, to a circuit 44 of interest of the electric circuit 42 for further processing. The label information can consist of data or signals which form part of a communication protocol or a multi-label protocol.

For receiving signals generated by the label, again use can be made of a receiver 27 and a microprocessor 22 such as this has been discussed in relation to Fig. 2. Optionally, the signals that are supplied to the modulator 34 can also be supplied via the microprocessor 22 to the interrogation unit 31. All this in a manner entirely analogous to that as has been discussed in relation to Fig. 2.

Although the method used for single sideband modulation is a generally used method, this method has the disadvantage in the present application that a special high-frequency filter circuit 39 must be used, which must be accurately tuned and is susceptible to drift and aging. Moreover, the necessary flank steepness adjacent the carrier frequency is so great that it is hardly realizable using LC circuits on the operating frequency of 13.56 MHz. Realizing the modulator at a lower medium frequency and subsequently converting that signal to 13.56 MHz is a possible solution, but the interrogation unit is thereby rendered unnecessarily complicated.

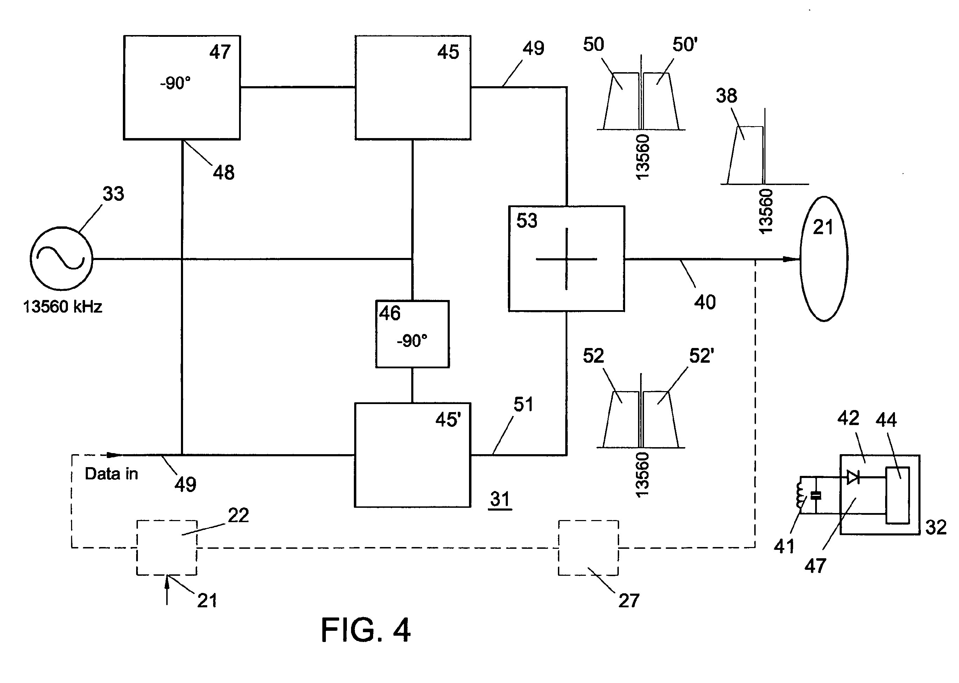

An exemplary embodiment of an interrogation unit which does not have this disadvantage is discussed with reference to Fig. 4. In Fig. 4, parts corresponding with Fig. 3 have been provided with the same reference numerals. The interrogation unit comprises a first and a second AM double sideband modulator 45, 45', an oscillator 33 for generating an electromagnetic signal, in this example the carrier frequency of 13.560 MHz. The interrogation unit further comprises first phase-shifting means 46 for generating a first and second electromagnetic signal which are shifted 90° in phase relative to each other. In this example, this is realized with a 90° phase shifter to which the electric signal of the oscillator 33 is supplied. The first electromagnetic signal then consists of the electromagnetic signal itself, coming from the oscillator, while the second electromagnetic signal consists of the output signal of the phase shifter 46. The first electromagnetic signal in this example is fed to the modulator 45, while the second electromagnetic signal is fed to the modulator 45'. The interrogation unit further comprises second phase-shifting means 47, comprising an input 48 to which, in use, the label information is fed. In this example, label information is supplied via line 49 to the interrogation unit. The label information is supplied directly, via line 49, to the modulator 45' and is supplied to the modulator 45 via the phase shifter 47. Thus a first label information signal is supplied to the modulator 45 which is shifted 90° in phase relative to a second label information signal, which is supplied to the modulator 45'. The first and second label information signal agree with each other in content. In this example, it holds additionally that the second label information signal is equal to the label information which is supplied to the interrogation unit via line 49. Thus the modulator 45 modulates the first electromagnetic signal with the first label information signal, coming from the phase shifter 47, with a double sideband. The thus obtained modulated signal is available on a line 49 and comprises two sidebands 50, 50', as schematically indicated in Fig. 4. Further, to the modulator 45', the second label information signal is supplied, which in this example corresponds with the label information. The modulator 45' modulates the second electromagnetic signal, coming from the phase shifter 46, with this second label information signal, to obtain a modulated signal on line 51, which signal likewise comprises two sidebands 52, 52'. The two modulated signals are then added by means of adder 53, and via an output of the adder 53 and via a line 40 the thus added signal is fed to the antenna 21. In this example, on line 40, the interrogation field provided with only a single sideband is available. During addition, the sidebands 50' and 52' balance out, since they are in opposite phase. The sidebands 50 and 52 are in phase. The interrogation field with the single sideband 38 is again schematically designated in Fig. 4. In a manner entirely analogous to that discussed in relation to Fig. 3, the interrogation unit may further comprise a receiver 27 and a microprocessor 22, while it holds again that the label information is supplied via the microprocessor 22 to the modulators and that the received signals, via the receiver 27 and the microprocessor 22, are available at the output 23 of the microprocessor for further processing.

Crucial to the single sideband modulator according to the phase method is the 90° phase shifter for the modulation signal. Since the modulation signal has a relatively large bandwidth, over which bandwidth a constant phase shift of 90° must be realized, specialized circuits are needed for that purpose. An example of such a circuit is the polyphase network as mentioned in applicant's EP No 0 608 961.

The 90° phase shift is sometimes referred to, in terms of signal theory, as the Hilbert transformation. The Hilbert transformation can also be carried out in numerical form by means of a digital signal processor. In this way, it becomes possible for the two modulation signals which are supplied to the two modulators 45, to be generated digitally in the central processor of the reading unit.

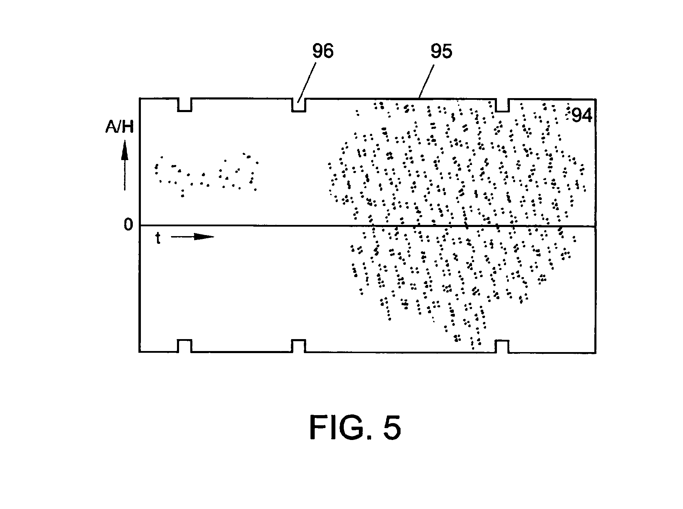

A further simplification is rendered possible in that the modulation signal is highly uniform, viz. a dip in the carrier level of about 5-15%, preferably 10%, of relatively short duration, followed by a longer period in which the carrier is unmodulated. This modulation is shown in Fig. 5, where the modulated signal is indicated by 94. The unmodulated amplitude is indicated by 95, and the dip caused by the modulation is indicated by 96. A(t) is the instantaneous time-dependent amplitude of the signal and t is time.

The digital information which the interrogation unit transfers to the label consists in the presence/absence of such a dip and the position thereof. The Hilbert transform of this modulation signal is thus determined by one such modulation dip and therefore has a fixed shape. Accordingly, this signal form only needs to be determined a single time, and can therefore be fixedly stored in a memory, in the form of a table. This means that for generating the single sideband signal, no DSP calculations need to be carried out by the processor of the interrogation unit, but only the content of two tables of the original modulation signal (a predetermined first digital signal form) and of its Hilbert transform (a predetermined second digital signal form) need to be converted to two analog signals via a double DAC (Digital-Analog Converter). Driving a routine which performs this action, and the timing thereof, determine the data transfer to the label.

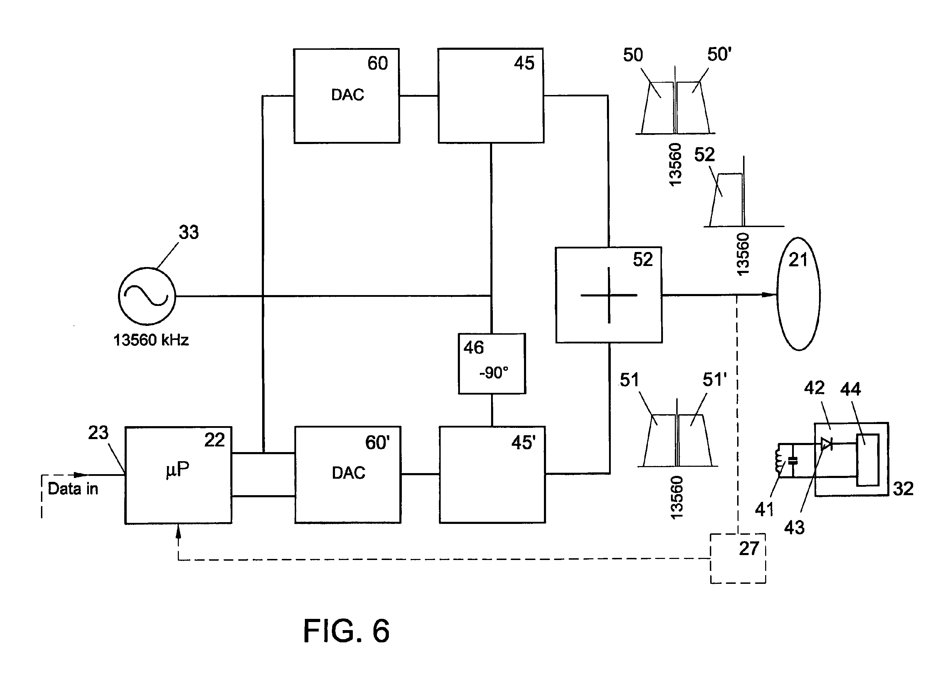

In Fig. 6, parts corresponding with Fig. 4 have been provided with the same reference numerals. The two phase shifting means 47 have been replaced with a digital signal processor 22 and a first and second D/A converter 60, 60'. The first and second D/A converter 60, 60' have been connected with the digital signal processor 22. The signal processor 22 is provided with an input 23 to which, in use, the label information is fed in digital form. The digital signal processor is arranged for subjecting the digital label information to a Hilbert transformation to obtain a first and a second digital label signal, which are respectively supplied to the first and the second D/A converter to obtain the first and the second label information signal, respectively, which, in use, are supplied to the modulators 45, 45'.

In particular, the digital signal processor includes at least one table which is filled with predetermined digital signal forms. The processor is arranged for selecting, depending on the label information supplied to the processor, digital signal forms from the at least one table to obtain the first and the second digital label signal. More particularly, it holds that in the digital processor, the first and the second table are stored which are respectively filled with a plurality of predetermined first and second digital signal forms. The processor is then arranged for selecting, depending on the label information supplied to the processor, first digital signal forms from the first table to obtain the first digital label signal and second digital signal forms from the second table to obtain the second digital label signal. The first and the second digital label signal are then supplied to the D/A converter 60, 60', respectively. In particular, when use is made of the dips 36, such as has been discussed with reference to Fig. 5, this embodiment is particularly advantageous. Indeed, the Hilbert transform of such a modulation signal is determined by one such modulation dip and therefore has a fixed form. This fixed form is then predetermined and is stored in the tables referred to in the form of digital signal forms. Further, in addition to the Hilbert transform of the dip, the signal form of the dip itself is stored in the table. When a dip is present, the signal form of the dip, as well as the Hilbert transform thereof, can be read from the table and be supplied (after D/A conversion) by the modulator 45" and the modulator 45, respectively. After D/A conversion, the first digital label signal (i.e. the selected first signal form) gives the Hilbert transform of the dip, and the second digital label signal (i.e. the selected second signal form) gives the dip itself.

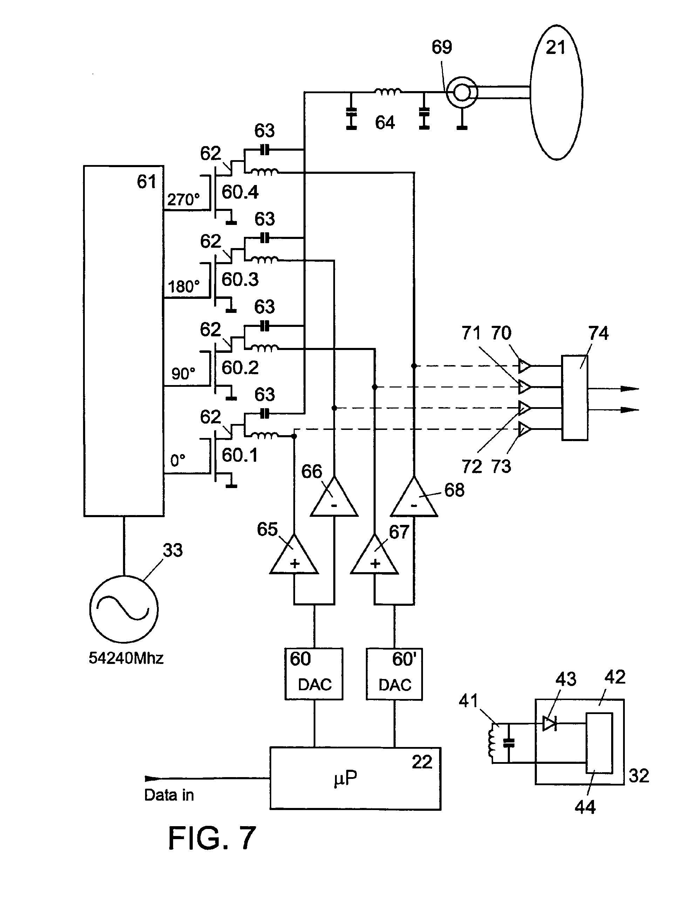

In Fig. 7 a further elaboration of the block diagram of Fig. 6 is shown. In this elaboration, the function of the two double sideband modulators 45, 45' is integrated in a circuit with four transistors 60.1, 60.2, 60.3 and 60.4. These transistors are switched by the four outputs of a four-divider 61, which is driven by oscillator 33, which now oscillates, however, at the four-fold of the operating frequency 54.24 MHz. The transistors 60 are now complementarily switched on/off in pairs (60.1 and 60.3) (60.2 and 60.4), with a 90° phase difference existing between the pair of transistors 60.1 and 60.3 and the pair of transistors 60.2 and 60.4. For the transistors of each pair, it holds that these are complementarily switched on and off, so that always one of the transistor pairs is then switched on, and one of the transistor pairs is switched off.

The drains 62 of the transistors are high frequency- connected with each other via isolating capacitors 63 and further coupled via harmonics filter 44 with an output 69, which is coupled with the antenna 21. The four transistor circuits are each supplied from (power) amplifiers 65, 66, 67 and 68. The amplifiers 66 and 68 have an inverting action. They are driven pairwise by the digital-analog converters 60, 60'. The signal processor 22 drives the digital-analog converters with the digital representations of the original modulation signal and the Hilbert transform thereof, i.e. with the first and second digital label signal, respectively. These signal forms are stored in the memory of the microprocessor.

If the transistors 60 further form the output amplifier of the transmitter section of the interrogation unit, and the output 69 is connected with the antenna 21, the circuit of Fig. 7 can further be utilized for the reception of the signal transmitted by the label. The outputs of the amplifiers 65-68 should then be further connected with the inputs of four amplifiers 70-73 for the receiver device 27. The sideband selection can then again be carried out by means of a polyphase network 74.

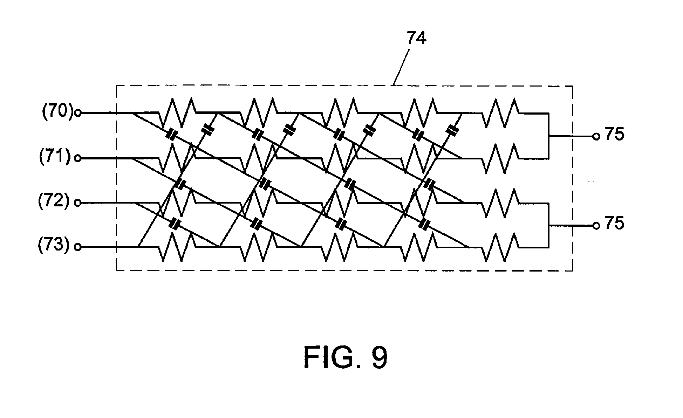

Fig. 9 shows such a polyphase network to which the output signals of the amplifier 70-73 are supplied, while at the output 75 of the polyphase network the sideband in question has been selected. For further information about the polyphase network, reference is made to: "Single Sideband Modulation using sequence a-symmetric polyphase networks" by M.J. Gingell, Electrical Communication, Vol. 48, Nos. 1 and 2, 1973, pages 21-25, and British patents 1,174,709 and 1,174,710. A signal received by means of the antenna 21 is thus demodulated using the transistors 60.1-60.4. In fact, these transistors form mixers to which four reference signals are supplied with a frequency of 13.56 MHz and which have mutual phase differences of 90°, 180° and 270°.

The signals which are fed to the amplifiers 70-73 are thus signals which are removed from the carrier and which therefore comprise the sidebands around frequency 0.

Instead of carrying out the sideband selection using a polyphase network, sideband selection can also be carried out using a digital signal processor which performs a Hilbert transformation. In this example, for instance, use can be made of the signal processor 22. In that case, the output signals of the amplifiers 70-73 are supplied via A/D converters to the signal processor 22 for carrying out the Hilbert transformation for the purpose of selecting the sideband in question.

The operation of the receiver device thus corresponds to the operation of the receiver device according to Fig. 11 of EP 0 608 961 with omission of PN22 or PN23. The mixers 16, 17 of Fig. 11 correspond with the first pair of transistors 60.1, 60.3 and the second pair of transistors 60.2, 60.4, respectively. If instead of a phase rotating network a digital signal processor is used, the operation of the receiver corresponds with Fig. 12 according to EP 0 608 961.

In a third method of generating a single sideband signal, the starting point is the datum that a single sideband signal can be mathematically written as the product of a phase-modulated carrier on the one hand, with an amplitude function on the other, in formulaic form:

$$S_{ezb}(t) = A(t) * \sin(2pf_c t + Df(t))$$

wherein A(t) is the amplitude function and Df(t) is the phase modulation. This method can be utilized in a simple manner if the carrier is generated by means of a numerical oscillator. The required phase modulation can be carried out in a very accurate manner with such a numeric oscillator, the technical realization of which is called a Direct Digital Synthesizer (DDS). The amplitude modulation may be numerically co-integrated in the DDS circuit.

In this method, too, again use can be made of signal forms for the phase and the amplitude function, which are stored in tabular form. Digital analog conversion of the modulation signal components is not necessary. The numerically generated high-frequency signal is converted in a digital-analog converter, which is often integrated in the DDS chip, to the high-frequency signal which upon amplification generates the magnetic field of the reading unit.

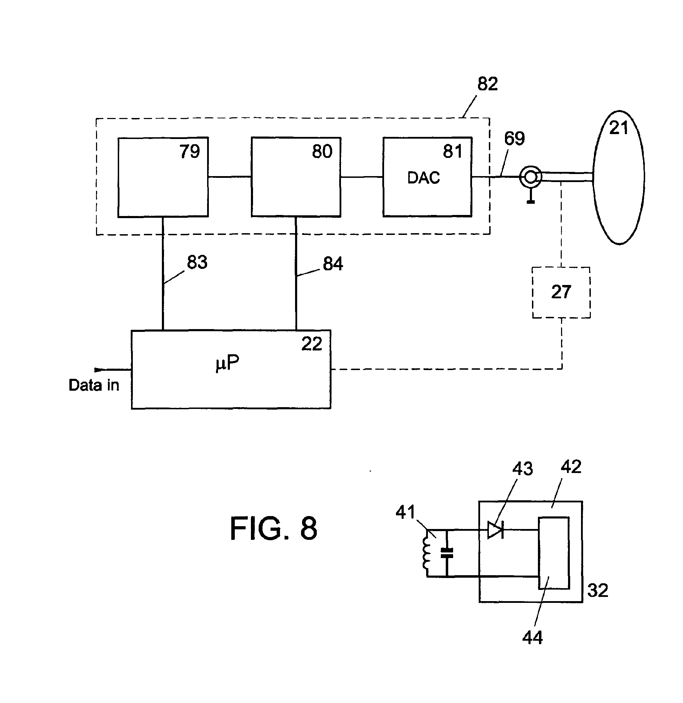

Fig. 8 shows the block diagram of a single sideband generator for an interrogation field according to this last method. The interrogation unit comprises an oscillator 79 for generating the carrier modulated in phases, and an amplitude modulator 80 for multiplying the phase-modulated carrier with the amplitude function. In this example, the oscillator comprises a numerical oscillator 79 and the amplitude modulator 80 in this example comprises a numerical amplitude modulator 80. In this example, the label information is again supplied to the signal processor 22. Depending on the label information, the signal processor drives the numerical amplitude modulator via line 83. Further, depending on the label information, the signal processor 22 drives the numerical oscillator via line 84. The interrogation unit further comprises a D/A converter 81, to which the signal generated by the amplitude modulator 80 is supplied for obtaining the interrogation field, modulated with the single sideband, on the output 69 which in this example is again connected with the antenna 19. The components 79, 80 and 81 may be integrated into a direct digital synthesizer 82.

In this example, the processor 22 can again comprise at least one table filled with predetermined digital signal forms. Depending on the label signal supplied to the processor, the processor selects digital signal forms from this table. These digital signal forms are supplied to the numerical oscillator and the numerical modulator, respectively, for generating the interrogation field modulated with the single sideband. The digital signal forms in question are predetermined and can again be relatively simple when an amplitude modulation is used such as has been discussed in relation to Fig. 5.

The device according to Fig. 8 can again comprise a receiver device 27 for receiving return signals from a label 32. For demodulating the signals in question, again use can be made of the signal processor 22, such as this has been discussed hereinbefore. Also, the receiver device 27 in each of the above-outlined embodiments can be provided with a phase-rotating network, such as a polyphase network, such as has been discussed in relation to Figs. 7 and 9. Such variants are all understood to fall within the framework of the invention as defined by the appended claims.

**Claims**

1. A detection system comprising an interrogation unit for generating an electromagnetic interrogation field including a single sideband, and at least one label comprising a resonant circuit and an electric circuit, coupled to the resonant circuit,

   the resonant circuit resonating upon being introduced into the interrogation field,

   and the electric circuit optionally driving the resonant circuit in response thereto for transmitting information stored in the electric circuit, such as, for instance, identification information of the label,

   **characterized in that**

   the interrogation field is modulated with the single sideband with label information to be sent to the label, such as data or signals which form part of a communication protocol or a multi-label protocol,

   the electric circuit of the label comprising an envelope detector for demodulation of the interrogation field modulated with the single sideband.

2. A detection system according to claim 1, **characterized in that** the interrogation unit comprises an oscillator for generating an electromagnetic signal, an AM double sideband modulator connected with the oscillator, having an input to which, in use, the label information is supplied for modulating the electromagnetic signal with the label information, such that the electromagnetic signal is modulated with a double sideband with the label information, and a filter connected with the modulator for suppressing one of the sidebands in the electromagnetic signal modulated with two sidebands by the modulator, for obtaining the interrogation field modulated with the single sideband.

3. A detection system according to claim 1, **characterized in that** the interrogation unit comprises a first and a second AM double sideband modulator, an oscillator for generating an electromagnetic signal, first phase-shifting means, connected with the oscillator, for obtaining a first and a second electromagnetic signal shifted 90° in phase relative to each other and which, in use, are supplied to the first and the second modulator, respectively, and second phase-shifting means comprising an input to which, in use, the label information is supplied for obtaining a first and second label information signal which correspond with each other in content and which are shifted 90° in phase relative to each other, the interrogation unit further being arranged such that, in use, the first and the second label information signal are supplied to the first and the second modulator, respectively, for respectively modulating the first electromagnetic signal with a double sideband with the first label information signal and modulating the second electromagnetic signal with a double sideband with the second label information signal, the interrogation unit further comprising an adder which is connected with the first and second modulator for adding the first and second electromagnetic signals modulated by the first and second modulator, to obtain the interrogation field modulated with the single sideband.

4. A detection system according to claim 3, **characterized in that** the label information corresponds in content with the first and second label information signal.

5. A detection system according to claim 3, **characterized in that** the second phase shifting means comprise a digital signal processor and a first and a second D/A converter which are connected with the digital signal processor, the signal processor comprising an input to which, in use, the label information is supplied in digital form to the signal processor, the digital signal processor being arranged for subjecting the digital label information to a Hilbert transformation to obtain a first and a second digital label signal which are respectively supplied to the first and the second D/A converter to obtain, respectively, the first and the second label information signal which, in use, are supplied to the first and the second modulator.

6. A detection system according to any one of claims 3-5, **characterized in that** the digital signal processor comprises at least one table which is filled with predetermined digital signal forms, the processor being arranged for selecting, depending on the label information supplied to the processor, digital signal forms from the at least one table to obtain the first and the second digital label signal.

7. A detection system according to claim 6, **characterized in that** in the digital processor a first and a second table are stored which are respectively filled with a plurality of predetermined first and second digital signal forms, the processor being arranged for selecting, depending on the label information supplied to the processor, first digital signal forms from the first table to obtain the first digital label signal, and selecting second digital signal forms from the second table to obtain the second digital label signal, the second digital signal forms being the Hilbert transforms of the first digital signal forms.

8. A detection system according to any one of the preceding claims 3-7, **characterized in that** the modulated interrogation field comprises a carrier with a number of dips at a mutual distance in the carrier, the duration of a dip being substantially smaller than the distance between two dips, and the dips being the modulation of the interrogation field.

9. A detection system according to claim 8, **characterized in that** the depth of a dip is about 5-15% of the amplitude of the carrier.

10. A detection system according to any one of the preceding claims, **characterized in that** the interrogation unit further comprises a receiver for receiving resonance effects which have been induced by the label in the interrogation field.

11. A detection system according to claim 10, **characterized in that** the receiver comprises a digital processor for performing a Hilbert transformation, of a phase rotating network.

12. A detection system according to any one of claims 3-9, and according to claim 11, **characterized in that** the receiver is connected with the first and second modulator for demodulating the received interrogation field on the basis of the first and second electromagnetic signal.

13. A detection system according to claim 1, **characterized in that** the interrogation unit comprises means for generating the modulated interrogation field on the basis of a product of a carrier which has been phase-modulated according to a time-dependent function on the one hand and a time-dependent amplitude function on the other.

14. A detection system according to claim 13, **characterized in that** the means comprise an oscillator for generating the phase-modulated carrier and an amplitude modulator for multiplying the phase-modulated carrier with the amplitude function.

15. A detection system according to claim 14, **characterized in that** the oscillator comprises a numerical oscillator and that the amplitude modulator comprises a numerical amplitude modulator, said means further comprising a digital signal processor which, depending on the label information, drives the numerical amplitude modulator and the numerical oscillator, the interrogation unit further comprising a D/A converter to which the signal generated by the amplitude modulator is supplied for obtaining the interrogation field modulated with the single sideband.

16. A detection system according to claim 15, **characterized in that** the processor comprises at least one table which is filled with predetermined digital signal forms, while the processor, depending on the label signal supplied to the processor, selects digital signal forms and supplies same to the numerical oscillator and the numerical modulator for generating the interrogation field modulated with the single sideband.

**Patentansprüche**

1. Detektionssystem mit einer Abfrageeinheit zum Erzeugen eines elektromagnetischen Abfragefelds, das ein Einseitenband aufweist, und mit mindestens einem Etikett, das eine Resonanzschaltung und eine mit der Resonanzschaltung gekoppelte elektrische Schaltung aufweist,
wobei die Resonanzschaltung bei Einführung in das Abfragefeld schwingt,
und die elektrische Schaltung als Antwort darauf optional die Resonanzschaltung derart treibt, dass diese in der elektrischen Schaltung gespeicherte Information wie z.B. Identifikationsinformation des Etiketts sendet,
**dadurch gekennzeichnet, dass**
das Abfragefeld mit dem Einseitenband mit an das Etikett auszusendender Etikettinformation, wie z.B. Daten oder Signalen, die einen Teil eines Kommunikationsprotokolls oder eines Mehr-Etikett-Protokolls bilden, moduliert wird,
wobei die elektrische Schaltung des Etiketts einen Hülldetektor zur Demodulation des mit dem Einseitenband modulierten Abfragefelds aufweist.

2. Detektionssystem nach Anspruch 1, **dadurch gekennzeichnet, dass** das Abfragefeld aufweist: einen Oszillator zum Erzeugen eines elektromagnetischen Signals und einen mit dem Oszillator verbundenen AM-Doppelseitenbandmodulator mit einem Eingang, dem bei Betrieb die Etikettinformation zugeführt wird, um das elektromagnetische Signal mit der Etikettinformation derart zu modulieren, dass das elektromagnetische Signal mit einem Doppelseitenband mit der Etikettinformation moduliert wird, und einen Filter, der mit dem Modulator verbunden ist, um eines der Seitenbänder in dem mit den beiden Seitenbändern durch den Modulator modulierten elektromagnetischen Signal zu unterdrücken, um das mit dem Einseitenband modulierte Abfragefeld zu bilden.

3. Detektionssystem nach Anspruch 1, **dadurch gekennzeichnet, dass** die Abfrageeinheit aufweist: einen ersten und einen zweiten AM-Doppelseitenbandmodulator, einen Oszillator zum Erzeugen eines elektromagnetischen Signals, eine mit dem Oszillator verbundene erste Phasenverschiebungsvorrichtung zum Erzeugen eines ersten und eines zweiten elektromagnetischen Signals, die relativ zueinander um 90° phasenverschoben sind und die bei Betrieb dem ersten bzw. dem zweiten Modulator zugeführt werden, und eine zweite Phasenverschiebungsvorrichtung mit einem Eingang, dem bei Betrieb die Etikettinformation zugeführt wird, um ein erstes und ein zweites Etikettinformationssignal zu erzeugen, die inhaltlich einander entsprechen und relativ zueinander um 90° phasenverschoben sind, wobei die Abfrageeinheit ferner derart ausgebildet ist, dass bei Betrieb die ersten und zweiten Etikettinformationssignale dem ersten bzw. dem zweiten Modulator zugeführt werden, um das erste elektromagnetische Signal mit einem Doppelseitenband mit dem ersten Etikettinformationssignal zu modulieren bzw. das zweite elektromagnetische Signal mit einem Doppelseitenband mit dem zweiten Etikettinformationssignal zu modulieren, wobei die Abfrageeinheit ferner einen Addierer aufweist, der mit dem ersten und dem zweiten Modulator verbunden ist, um die von dem ersten und dem zweiten Modulator modulierten ersten und zweiten elektromagnetischen Signale zu addieren und **dadurch** das mit dem Einseitenband modulierte Abfragefeld zu bilden.

4. Detektionssystem nach Anspruch 3, **dadurch gekennzeichnet, dass** die Etikettinformation inhaltlich dem ersten und dem zweiten Etikettinformationssignal entspricht.

5. Detektionssystem nach Anspruch 3, **dadurch gekennzeichnet, dass** die zweite Phasenverschiebungsvorrichtung einen Digitalsignalprozessor und einen ersten und einen zweiten Digital-/Analog-Wandler aufweist, die mit dem Digitalsignalprozessor verbunden sind, wobei der Signalprozessor einen Eingang aufweist, über den bei Betrieb die Etikettinformation in Digitalform an den Signalprozessor zugeführt wird, wobei der Digitalsignalprozessor derart ausgebildet ist, dass er die digitale Etikettinformation einer Hilbert-Transformation unterzieht, um ein erstes und ein zweites digitales Etikettsignal zu erzeugen, die dem ersten bzw. dem zweiten Digital-/Analog-Wandler zugeführt werden, um das erste bzw. das zweite Etikettinformationssignal zu bilden, die bei Betrieb dem ersten und dem zweiten Modulator zugeführt werden.

6. Detektionssystem nach einem der Ansprüche 3-5, **dadurch gekennzeichnet, dass** der Digitalsignalprozessor mindestens eine Tabelle enthält, die mit vorbestimmten Digitalsignalformen gefüllt ist, wobei der Prozessor derart ausgebildet ist, dass er in Abhängigkeit von der dem Prozessor zugeführten Etikettinformation Digitalsignalformen aus der mindestens einen Tabelle auswählt, um das erste und das zweite digitale Etikettsignal zu bilden.

7. Detektionssystem nach Anspruch 6, **dadurch gekennzeichnet, dass** in dem Digitalprozessor eine erste und eine zweite Tabelle gespeichert sind, die mit mehreren vorbestimmten ersten bzw. zweiten Digitalsignalformen gefüllt sind, wobei der Prozessor derart ausgebildet ist, dass er in Abhängigkeit von der dem Prozessor zugeführten Etikettinformation erste Digitalsignalformen aus der ersten Tabelle auswählt, um das erste digitale Etikettsignal zu bilden, und zweite Digitalsignalformen aus der zweiten Tabelle auswählt, um das zweite digitale Etikettsignal zu bilden, wobei die zweiten Digitalsignalformen die Hilbert-Transformation der ersten Digitalsignalformen sind.

8. Detektionssystem nach einem der vorhergehenden Ansprüche 3-7, **dadurch gekennzeichnet, dass** das modulierte Abfragefeld einen Träger mit einer Anzahl von Dips aufweist, die in gegenseitigem Abstand in dem Träger auftreten, wobei die Dauer eines Dip wesentlich kürzer ist als der Abstand zwischen zwei Dips und die Dips die Modulation des Abfragefelds sind.

9. Detektionssystem nach Anspruch 8, **dadurch gekennzeichnet, dass** die Tiefe eines Dip ungefähr 5-15% der Amplitude des Trägers beträgt.

10. Detektionssystem nach einem der vorhergehenden Ansprüche, **dadurch gekennzeichnet, dass** die Abfrageeinheit ferner einen Empfänger zum Empfangen von Resonanzeffekten aufweist, die durch das Etikett in dem Abfragefeld induziert worden sind.

11. Detektionssystem nach Anspruch 10, **dadurch gekennzeichnet, dass** der Empfänger einen Digitalprozessor zum Durchführen einer Hilbert-Transformation oder ein phasendrehendes Netzwerk aufweist.

12. Detektionssystem nach einem der Ansprüche 3-9 und gemäß Anspruch 11, **dadurch gekennzeichnet, dass** der Empfänger mit dem ersten und dem zweiten Modulator verbunden ist, um das empfangene Abfragefeld auf der Basis des ersten und des zweiten elektromagnetischen Signals zu demodulieren.

13. Detektionssystem nach Anspruch 1, **dadurch gekennzeichnet, dass** die Abfrageeinheit eine Vorrichtung zum Erzeugen des modulierten Abfragefelds auf der Basis eines Produkts eines Trägers aufweist, der einerseits nach einer zeitabhängigen Funktion und andererseits nach einer zeitabhängigen Amplitudenfunktion phasenmoduliert worden ist.

14. Detektionssystem nach Anspruch 13, **dadurch gekennzeichnet, dass** die Vorrichtung einen Oszillator zum Erzeugen des phasenmodulierten Trägers und einen Amplitudenmodulator aufweist, um den phasenmodulierten Träger mit der Amplitudenfunktion zu multiplizieren.

15. Detektionssystem nach Anspruch 14, **dadurch gekennzeichnet, dass** der Oszillator einen numerischen Oszillator aufweist und dass der Amplitudenmodulator einen numerischen Amplitudenmodulator aufweist,
wobei die besagte Vorrichtung ferner einen Digitalsignalprozessor aufweist, der den numerischen Amplitudenmodulator und den numerischen Oszillator in Abhängigkeit von der Etikettinformation treibt, wobei die Abfrageeinheit ferner einen Digital-/Analog-Wandler aufweist, dem das von dem Amplitudenmodulator erzeugte Signal zugeführt wird, um das mit dem Einseitenband modulierte Abfragefeld zu bilden.

16. Detektionssystem nach Anspruch 15, **dadurch gekennzeichnet, dass** der Prozessor mindestens eine Tabelle enthält, die mit vorbestimmten Digitalsignalformen gefüllt ist, wobei der Prozessor in Abhängigkeit von dem dem Prozessor zugeführten Etikettsignal Digitalsignalformen auswählt und diese dem numerischen Oszillator und dem numerischen Modulator zuführt, um das mit dem Einseitenband modulierte Abfragefeld zu bilden.

## Revendications

1. Système de détection comprenant une unité d'interrogation pour générer un champ d'interrogation électromagnétique comportant une bande latérale unique et au moins une étiquette comprenant un circuit résonant et un circuit électrique, couplé au circuit résonant,

le circuit résonant résonnant lorsqu'il est introduit dans le champ d'interrogation,

et le circuit électrique excitant éventuellement le circuit résonant en réponse à celui-ci pour transmettre de l'information stockée dans le circuit électrique, comme, par exemple, de l'information d'identification de l'étiquette,

**caractérisé en ce que :**

le champ d'interrogation est modulé avec la bande latérale unique avec de l'information d'étiquette à envoyer à l'étiquette, comme des données ou des signaux qui font partie d'un protocole de communication ou d'un protocole à étiquettes multiples,

le circuit électrique de l'étiquette comprenant un détecteur d'enveloppe pour démoduler le champ d'interrogation modulé avec la bande latérale unique.

2. Système de détection selon la revendication 1, **caractérisé en ce que** l'unité d'interrogation comprend un oscillateur pour générer un signal électromagnétique, un modulateur à double bande latérale de modulation d'amplitude connecté à l'oscillateur, ayant une entrée qui, en utilisation, reçoit l'information d'étiquette pour moduler le signal électromagnétique avec l'information d'étiquette, de sorte que le signal électromagnétique est modulé avec une double bande latérale avec l'information d'étiquette, et un filtre connecté au modulateur pour supprimer l'une des bandes latérales dans le signal électromagnétique modulé avec deux bandes latérales par le modulateur, pour obtenir le champ d'interrogation modulé avec la bande latérale unique.

3. Système de détection selon la revendication 1, **caractérisé en ce que** l'unité d'interrogation comprend un premier et un deuxième modulateur à double bande latérale de modulation d'amplitude, un oscillateur pour générer un signal électromagnétique, un premier moyen de déphasage, connecté à l'oscillateur, pour obtenir un premier et un deuxième signal électromagnétique déphasés de 90° l'un par rapport à l'autre et qui, en utilisation, sont appliqués respectivement au premier et au deuxième modulateurs, et un deuxième moyen de déphasage comprenant une entrée qui, en utilisation, reçoit l'information d'étiquette pour obtenir un premier et un deuxième signal d'information d'étiquette dont le contenu correspond entre eux et qui sont déphasés de 90° l'un par rapport à l'autre, l'unité d'interrogation étant en outre adaptée de telle manière que, en utilisation, les premier et deuxième signaux d'information d'étiquette sont appliqués respectivement au premier et au deuxième modulateurs pour moduler respectivement le premier signal électromagnétique avec une double bande latérale avec le premier signal d'information d'étiquette et moduler le deuxième signal électromagnétique avec une double bande latérale avec le deuxième signal d'information d'étiquette, l'unité d'interrogation comprenant en outre un additionneur qui est connecté aux premier et deuxième modulateurs pour additionner les premier et deuxième signaux électromagnétiques modulés par les premier et deuxième modulateurs, pour obtenir le champ d'interrogation modulé avec la bande latérale unique.

4. Système de détection selon la revendication 3, **caractérisé en ce que** l'information d'étiquette a un contenu qui correspond aux premier et deuxième signaux d'information d'étiquette.

5. Système de détection selon la revendication 3, **caractérisé en ce que** le deuxième moyen de déphasage comprend un processeur de signaux numériques et un premier et un deuxième convertisseur numérique-analogique qui sont connectés au processeur de signaux numériques, le processeur de signaux comprenant une entrée qui reçoit, en utilisation, l'information d'étiquette sous forme numérique, le processeur de signaux numériques étant adapté pour soumettre l'information d'étiquette numérique à une transformation de Hilbert pour obtenir un premier et un deuxième signal d'étiquette numérique qui sont respectivement fournis aux premier et deuxième convertisseurs numérique-analogique pour obtenir respectivement les premier et deuxième signaux d'information d'étiquette qui, en utilisation, sont appliqués aux premier et deuxième modulateurs.

6. Système de détection selon l'une quelconque des revendications 3 à 5, **caractérisé en ce que** le processeur de signaux numériques comprend au moins un tableau qui est rempli avec des formes de signaux numériques prédéterminées, le processeur étant adapté pour sélectionner, en fonction de l'information d'étiquette fournie au processeur, des formes de signaux numériques dans le tableau pour obtenir les premier et deuxième signaux d'étiquette numériques.

**7.** Système de détection selon la revendication 6, **caractérisé en ce que**, dans le processeur numérique, un premier et un deuxième tableau sont stockés, lesquels sont respectivement remplis d'une pluralité de premières et deuxièmes formes de signaux numériques prédéterminées, le processeur étant adapté pour sélectionner, en fonction de l'information d'étiquette fournie au processeur, des premières formes de signaux numériques dans le premier tableau pour obtenir le premier signal d'étiquette numérique, et pour sélectionner des deuxièmes formes de signaux numériques dans le deuxième tableau pour obtenir le deuxième signal d'étiquette numérique, les deuxièmes formes de signaux numériques étant les transformées de Hilbert des premières formes de signaux numériques.

**8.** Système de détection selon l'une quelconque des revendications 3 à 7, **caractérisé en ce que** le champ d'interrogation modulé comprend une porteuse avec des creux à une distance mutuelle dans la porteuse, la durée d'un creux étant sensiblement inférieure à la distance entre deux creux, et les creux étant la modulation du champ d'interrogation.

**9.** Système de détection selon la revendication 8, **caractérisé en ce que** la profondeur d'un creux représente de 5 à 15 % de l'amplitude de la porteuse.

**10.** Système de détection selon l'une quelconque des revendications précédentes, **caractérisé en ce que** l'unité d'interrogation comprend en outre un récepteur pour recevoir des effets de résonance qui ont été induits par l'étiquette dans le champ d'interrogation.

**11.** Système de détection selon la revendication 10, **caractérisé en ce que** le récepteur comprend un processeur numérique pour effectuer une transformation de Hilbert, ou un réseau de rotation de phase.

**12.** Système de détection selon l'une quelconque des revendications 3 à 9, et selon la revendication 11, **caractérisé en ce que** le récepteur est connecté aux premier et deuxième modulateurs pour démoduler le champ d'interrogation reçu en se basant sur les premier et deuxième signaux électromagnétiques.

**13.** Système de détection selon la revendication 1, **caractérisé en ce que** l'unité d'interrogation comprend un moyen pour générer le champ d'interrogation modulé en se basant sur un produit d'une porteuse qui a été modulée en phase selon une fonction qui dépend du temps d'une part et une fonction d'amplitude qui dépend du temps d'autre part.

**14.** Système de détection selon la revendication 13, **ca-** ractérisé en ce que** le moyen comprend un oscillateur pour générer la porteuse modulée en phase et un modulateur d'amplitude pour multiplier la porteuse modulée en phase avec la fonction d'amplitude.

**15.** Système de détection selon la revendication 14, **caractérisé en ce que** l'oscillateur comprend un oscillateur numérique et **en ce que** le modulateur d'amplitude comprend un modulateur d'amplitude numérique, ledit moyen comprenant en outre un processeur de signaux numériques qui, en fonction de l'information d'étiquette, commande le modulateur d'amplitude numérique et l'oscillateur numérique, l'unité d'interrogation comprenant en outre un convertisseur numérique-analogique auquel est appliqué le signal généré par le modulateur d'amplitude pour obtenir le champ d'interrogation modulé avec la bande latérale unique.

**16.** Système de détection selon la revendication 15, **caractérisé en ce que** le processeur comprend au moins un tableau qui est rempli de formes de signaux numériques prédéterminées, tandis que le processeur, en fonction du signal d'étiquette fourni au processeur, sélectionne des formes de signaux numériques et les fournit à l'oscillateur numérique et au modulateur numérique pour générer le champ d'interrogation modulé avec la bande latérale unique.

FIG. 1

FIG. 2

FIG. 3

FIG. 4

EP 1 033 669 B1

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0608961 A
- GB 1174709 A
- GB 1174710 A

**Non-patent literature cited in the description**

- **Sabin ; Schoenike.** Single Sideband Systems & Circuits. McGraw-Hill, Inc,
- **M.J. Gingell.** Single Sideband Modulation using sequence a-symmetric polyphase networks. *Electrical Communication,* 1973, vol. 48 (1, 2), 21-25